Europäisches Patentamt

**European Patent Office**

Office européen des brevets

(19)

(11) Numéro de publication: **0 082 060**
**A1**

## (12) DEMANDE DE BREVET EUROPEEN

(21) Numéro de dépôt: 82402224.8

(22) Date de dépôt: 06.12.82

(51) Int. Cl.³: **F 16 B 21/18, B 63 B 35/72**

(30) Priorité: 07.12.81 FR 8122977

(43) Date de publication de la demande: 22.06.83
**Bulletin 83/25**

(84) Etats contractants désignés: **AT BE CH DE FR GB IT LI NL SE**

(71) Demandeur: **NAUTIX SARL, Zone Industrielle des Cinq Chemins, F-56520 Guidel (FR)**

(72) Inventeur: **Famelart, Hervé, 52 rue César, F-56100 Lorient (FR)**
Inventeur: **Langlois, Jean-Yves, 4 Impasse Marienne, F-56100 Lorient (FR)**

(74) Mandataire: **Corre, Jacques Denis Paul et al, Cabinet Regimbeau 26, Avenue Kléber, F-75116 Paris (FR)**

(54) Dispositif d'assemblage amovible d'un axe dans un fourreau.

(57) La présente invention concerne un dispositif d'assemblage amovible d'un axe (2) dans un fourreau (1), du type comprenant une gorge (5) prévue sur la périphérie extérieure de l'axe, un alésage (4) prévu dans le fourreau et débouchant dans un logement (6) aménagé dans le fourreau pour recevoir l'axe, la gorge et l'alésage (4, 5) étant adaptés pour venir en vis-à-vis lorsque l'axe et le fourreau sont placés en position d'assemblage; le dispositif comprend également un élément d'assemblage (3) possédant une section variable telle qu'il pénètre dans la gorge (5) lorsqu'il présente sa plus grande section, pour immobiliser en translation l'axe (2) par rapport au fourreau (1) et qu'il libère la gorge (5) lorsqu'il présente sa plus faible section pour autoriser le retrait de l'axe (2) hors du fourreau (1).

# DISPOSITIF D'ASSEMBLAGE AMOVIBLE D'UN AXE DANS UN FOURREAU

La présente invention concerne un dispositif d'assemblage amovible d'un axe dans un fourreau.

La présente invention s'applique en particulier, mais non exclusivement, à l'assemblage d'un pied de mât d'une planche à voile, dans un fourreau correspondant.

Plus précisément, la présente invention concerne un dispositif du type comprenant un premier évidement prévu sur la périphérie extérieure de l'axe, un deuxième évidement prévu dans le fourreau et débouchant dans un logement aménagé dans le fourreau pour recevoir l'axe, lesdits évidements étant adaptés pour venir en vis-à-vis lorsque l'axe et le fourreau sont placés en position d'assemblage, ainsi qu'un élément d'assemblage coopérant avec ces évidements.

De nombreux dispositifs de ce type ont déjà été proposés.

Tel que cela est décrit dans les demandes de brevet en France n° 2 118 637 et 2 446 401, on a ainsi proposé de loger, un anneau élastique, susceptible de déformations, dans des gorges annulaires prévues en vis-à-vis, d'une part sur l'axe, d'autre part, sur le fourreau. Les gorges et l'anneau doivent être conçus de telle sorte que ce dernier puisse être déformé pour autoriser l'insertion de l'axe dans le fourreau. Il en résulte que si une traction d'amplitude suffisante est exercée sur l'axe, celui-ci est retiré, sans contrôle, du fourreau, par déformation de l'anneau. Un tel dispositif ne présente aucune sécurité.

Comme cela est décrit dans les brevets Français n° 1 125 551, 2 415 571, ainsi que dans la demande de brevet Européenne n° 00 29 118 et le brevet Allemand n° 1 159 599, on a également proposé, des éléments d'assemblage, généralement métalliques, susceptibles d'être resserrés, la plupart du temps par diminution du rayon de courbure, sur une gorge prévue autour de l'axe. Tel que cela est décrit dans ces documents, ces dispositifs requièrent généralement des systèmes auxiliaires complexes pour solliciter la déformation de l'élément d'assemblage. D'autre part, une séparation fortuite de l'axe et du fourreau se produit fréquemment, ce qui ne peut être acceptable.

Enfin, tel que cela est décrit dans le brevet Suisse n° 476 219, on a également proposé d'assurer l'assemblage d'un axe et d'un fourreau à l'aide d'un organe flexible inséré dans un alésage cylindrique annulaire formé par des gorges prévues respectivement sur l'axe et sur le fourreau. Un tel dispositif nécessite un système de verrouillage pour l'élément d'assemblage lui-même, et s'avère peu fiable.

La présente invention vient maintenant proposer un nouveau dispositif d'assemblage qui comprend un élément d'assemblage possédant une section variable telle qu'il pénètre dans les deux évidements prévus respectivement sur l'axe et sur le fourreau, lorsqu'il présente sa plus grande section, pour immobiliser en translation l'axe par rapport au fourreau, et qu'il libère un évidement lorsqu'il présente sa plus faible section pour autoriser le retrait de l'axe hors du fourreau.

D'autres caractéristiques et avantages de la présente invention apparaîtront à la lecture de la description détaillée qui va suivre, et en regard des dessins annexés donnés à titre d'exemple non limitatif, et sur lesquels :

- la figure 1 représente une vue en coupe axiale d'un dispositif d'assemblage conforme à la présente invention, en position assemblée, selon le plan de coupe référencé I-I sur la figure 3,

     - la figure 2 représente une vue en coupe axiale du même dispositif d'assemblage, en position non assemblée,

     - la figure 3 représente une vue en coupe transversale du dispositif d'assemblage conforme à la présente invention selon un plan de coupe référencé III-III sur la figure 1.

     La description détaillée qui va suivre se rapporte à un dispositif d'assemblage d'un axe cylindrique dans un fourreau, tel qu'un pied de mât de planche à voile dans un fourreau correspondant. Cependant, cette description n'est pas limitative et la présente invention s'applique également à d'autres types d'axes, présentant par exemple une section carrée.

     On reconnaît sur les figures le fourreau 1 présentant un logement cylindrique 6 apte à recevoir un axe 2 de diamètre sensiblement inférieur dont l'axe est référencé O-O.

     L'axe 2 présente sur sa périphérie extérieure un premier évidement 5, formé plus précisément d'une gorge annulaire présentant de préférence une section droite hémicylindrique.

     De façon avantageuse, l'axe 2 possède une collerette 7 destinée à venir en appui contre la surface supérieure 8 du fourreau 1. Dans cette position, ledit premier évidement 5 se trouve en regard d'un second évidement 4 prévu dans le fourreau. De préférence il est prévu des moyens de guidage de l'axe 2 dans le fourreau 1. Pour ce faire, on peut prévoir de donner à l'axe 2 un diamètre légèrement inférieur à celui de l'alésage 6. On peut encore prévoir sur la périphérie de l'axe 2 à distance de la gorge 5 et à l'opposé de la collerette 7, des structures complémentaires de l'alésage 6.

4

En outre, pour faciliter la préhension de l'axe 2 on prévoit de préférence une structure rigide (non représentée) adjacente à la collerette 7.

Plus précisément, selon le mode de réalisation représenté le second évidement 4 se compose de deux alésages traversants rectilignes 4, 4' généralement parallèles, et symétriques par rapport à un plan axial du fourreau, qui débouchent dans le logement 6 et sur l'extérieur de la paroi du fourreau et tangentent le fond du premier évidement.

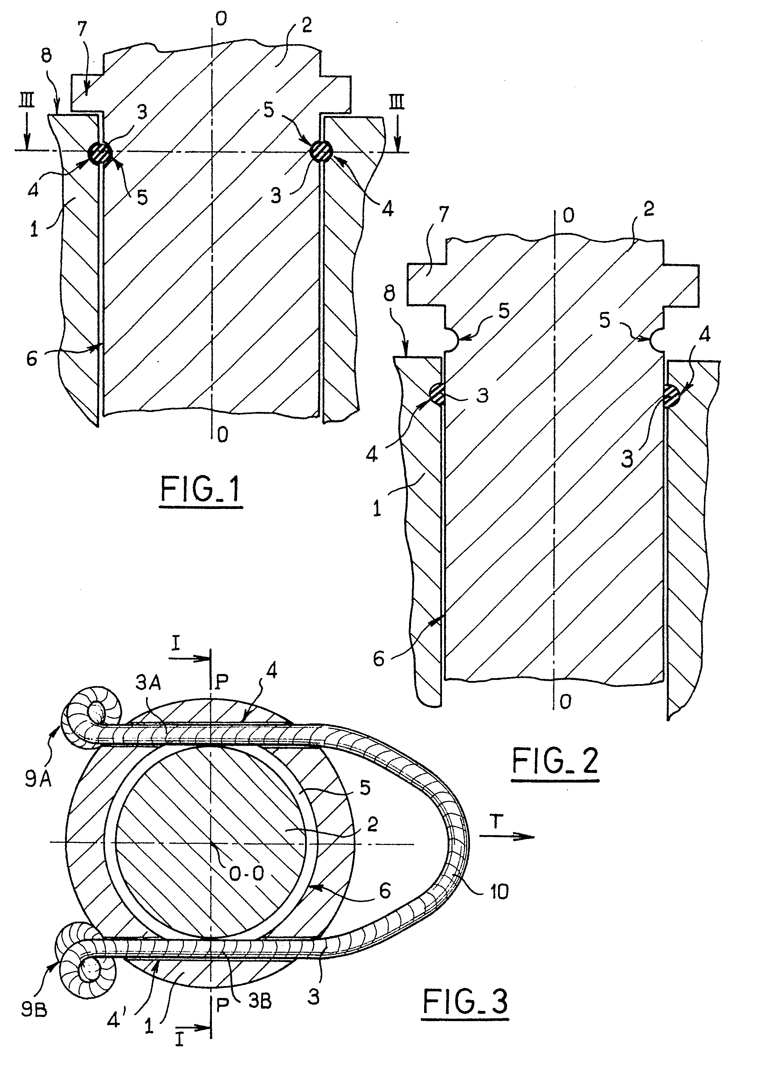

Ces alésages 4, 4' qui sont de préférence cylindriques ont leurs axes situés dans un même plan, perpendiculaire à l'axe O-O, à l'état assemblé et donc parallèle au plan de la figure 3. A l'état assemblé, l'axe de la gorge 5 est coplanaire avec les axes des alésages 4, 4'.

Bien entendu, d'autres dispositions peuvent être adoptées pour les évidements et on peut ainsi prévoir un seul alésage 4.

De même, on peut prévoir plusieurs niveaux de gorges 5 et celles-ci peuvent être formées de simples nervures rectilignes correctement positionnées et non point de gorges annulaires.

On aperçoit également sur les figures l'élément d'assemblage 3 possédant une section variable. Selon le mode de réalisation représenté, celui-ci se compose d'un matériau synthétique de forme générale en "U" dont chacune des branches 3A, 3B est introduite dans l'un des alésages 4, 4'. Au repos, c'est-à-dire lorsqu'il présente sa section maximale, l'élément 3 remplit les alésages 4 et 4'.

Les extrémités libres des branches 3A et 3B de l'élément d'assemblage 3, accessibles à l'extérieur du fourreau 1 sont munies de butées 9A et 9B aptes à interdire la pénétration de ces extrémités dans les alésages 4, 4' lorsqu'une traction est exercée sur la boucle 10 de l'élément 3 comme schématisé par la flèche T.

En l'espèce les butées 9A et 9B sont constituées par des noeuds formés auxdites extrémités des branches 3A et 3B de l'élément 3.

D'autres dispositifs, tels que des douilles ou bagues serties ou des moyens équivalents peuvent être prévus.

Le cas échéant, l'axe 2 et le fourreau 1 peuvent présenter des structures complémentaires telles que saillie et creux, (non représentées sur les figures) interdisant la rotation relative de ceux-ci.

Les dimensions et formes des alésages 4, 4' de la gorge 5 seront aisément déterminées de telle sorte que à l'état assemblé, et au repos, l'élément de blocage 3 occupe la totalité de l'orifice formé par ceux-ci au niveau d'un plan P-P (figure 3) passant par l'axe O-O, et normal aux axes des alésages 4,4'. Une telle disposition permet d'assurer un assemblage particulièrement sûr.

On comprend aisément qu'ainsi, au repos (figure 1) lorsque l'élément 3 présente sa plus grande section, il pénètre à la fois dans les alésages 4, 4' et dans la gorge 5 et de ce fait immobilise en translation l'axe 2 par rapport au fourreau 1.

Par contre, lorsque l'élément 3 présente sa section minimum (figure 2) c'est-à-dire lorsque l'on opère une traction T sur la boucle 10, selon le mode de réalisation représenté, l'élément 3 se retire de la gorge 5 et libère celle-ci pour autoriser le retrait axialement de l'axe 2 hors du fourreau 1.

Pour introduire l'axe 2 dans le fourreau 1 on tire sur l'élément 3 pour diminuer se section, puis on insère l'axe 2 dans le fourreau 1 et on relâche l'élément 3 quand la gorge 5 est en vis-à-vis des alésages 4, 4' (collerette 7 en appui contre la surface 8). Les opérations sont inversées pour le retrait.

Par rapport aux réalisations antérieures, le dispositif de la présente invention offre l'avantage de permettre une liaison aisée, simple, fiable et amovible sur demande, sans détérioration. De plus, l'élément 3 restant constamment en place, ne peut être perdu.

De par sa simplicité, le dispositif ne peut se gripper ou risquer de blesser l'utilisateur, ce qui est particulièrement avantageux dans le cas d'une planche à voile.

Bien entendu, la présente invention n'est pas limitée au mode de réalisation qui vient d'être décrit, mais s'étend à toutes variantes conformes à son esprit; ainsi on peut également prévoir de contrôler la température de l'élément 3 pour contrôler ses dilatations et donc ses variations de section, ou même on peut prévoir un élément d'assemblage 3 creux, contenant un fluide, avec contrôle de la quantité de fluide contenu et par le fait même de la section.

REVENDICATIONS

1. Dispositif d'assemblage amovible d'un axe (2) dans un fourreau (1), du type comprenant un premier évidement (5) prévu sur la périphérie extérieure de l'axe, un deuxième évidement (4) prévu dans le fourreau et débouchant dans un logement (6) aménagé dans le fourreau pour recevoir l'axe, lesdits évidements (4, 5) étant adaptés pour venir en vis-à-vis lorsque l'axe et le fourreau sont placés en position d'assemblage, caractérisé par le fait qu'il comprend également un élément d'assemblage (3) possédant une section variable telle qu'il pénètre dans les deux évidements (4,5) lorsqu'il présente sa plus grande section, pour immobiliser en translation l'axe (2) par rapport au fourreau (1) et qu'il libère un évidement (5) lorsqu'il présente sa plus faible section pour autoriser le retrait de l'axe (2)hors du fourreau (1).

2. Dispositif selon la revendication 1, caractérisé par le fait que le deuxième évidement (4) est un alésage traversant sensiblement rectiligne qui tangente le fond du premier évidement (5).

3. Dispositif selon l'une des revendications 1 et 2, caractérisé par le fait que le premier évidement (5) est une gorge annulaire de section droite généralement hémicylindrique.

4. Dispositif selon l'une des revendications 1 à 3, caractérisé par le fait que l'élément d'assemblage (3) est en un matériau tel que sa section diminue lorsqu'une traction est exercée sur celui-ci.

5. Dispositif selon l'une des revendications 1 à 4, caractérisé par le fait qu'il est prévu deux évidements (4, 4') dans le fourreau (1), symétriques par rapport à un plan axial de celui-ci et traversants

6. Dispositif selon la revendication 5, caractérisé par le fait que l'élément d'assemblage (13) est en un matériau synthétique élastique de forme générale en U dont chacune des branches (3A, 3B) est introduite dans l'un des évidements (4,4').

7. Dispositif selon la revendication 6, caractérisé par le fait que les extrémités libres des branches de l'élément d'assemblage (3), accessibles à l'extérieur du fourreau (1), sont munies de butées (9A, 9B).

8. Dispositif selon l'une des revendications 1 à 7, caractérisé par le fait que l'axe (2) et le fourreau (1) présentent des structures complémentaires aptes à interdire la rotation relative de ceux-ci.

9. Dispositif selon l'une des revendications 2 à 8, caractérisé par le fait que lorsqu'il présente sa plus grande section, l'élément d'assemblage (3) occupe la totalité de l'orifice formé par les évidements (4, 5) prévus dans le fourreau (1) et l'axe (2), au niveau d'un plan axial (P-P) normal aux axes desdits alésages (4).

10. Dispositif selon l'une des revendications 1 à 9, caractérisé par le fait que l'élément d'assemblage (3) est en un matériau synthétique.

0082060

FIG_1

FIG_2

FIG_3

Office européen
des brevets

**RAPPORT DE RECHERCHE EUROPEENNE**

0082060

Numéro de la demande

EP 82 40 2224

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-U-7 707 496 (WINTER) | | F 16 B 21/18 |
| | | | B 63 B 35/72 |
| | --- | | |
| P,X | FR-A-2 502 263 (JOLIVET) | | |
| | ----- | | |

| | | | DOMAINES TECHNIQUES RECHERCHES (Int. Cl. ³) |
|---|---|---|---|
| | | | B 63 B |
| | | | F 16 B |

Le présent rapport de recherche a été établi pour toutes les revendications

| Lieu de la recherche | Date d'achèvement de la recherche | Examinateur |
|---|---|---|
| LA HAYE | 15-03-1983 | VAN DER WAL W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82